(19) Europäisches Patentamt
European Patent Office
Office européen des brevets

(11) EP 4 083 134 A1

(12) **EUROPEAN PATENT APPLICATION**

(43) Date of publication:
**02.11.2022 Bulletin 2022/44**

(21) Application number: **21170614.8**

(22) Date of filing: **27.04.2021**

(51) International Patent Classification (IPC):
***C08L 23/12*** *(2006.01)*

(52) Cooperative Patent Classification (CPC):
(C-Sets available)
**C08L 23/12;** C08L 2207/02 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **HOFF, Matthias**
  **4021 Linz (AT)**
- **TÖLTSCH, Wilfried**
  **4021 Linz (AT)**

(74) Representative: **Maiwald Patent- und Rechtsanwaltsgesellschaft mbH**
**Elisenhof**
**Elisenstraße 3**
**80335 München (DE)**

(54) **BETA NUCLEATED HETEROPHASIC POLYPROPYLENE COMPOSITION**

(57) The invention is directed to a beta nucleated heterophasic propylene copolymer composition (HPPC).



Processed by Luminess, 75001 PARIS (FR)

**(Cont. next page)**

(52) Cooperative Patent Classification (CPC): (Cont.)

C-Sets
**C08L 23/12, C08L 23/16**

## Description

### Field of the Invention

The present invention concerns beta nucleated heterophasic polypropylenes and metallocene derived heterophasic polypropylenes.

### Background

The beta-form is a specific crystal modification of isotactic polypropylene formed during PP crystallization. It only exists with special conditions, e.g. with special nucleating agent and slow cooling rate. It is very sensitive to any disturbance like comonomer, or regio defects as occurring in metallocene-derived polypropylenes. Generally speaking, the existence of regio defects reduces the efficiency of any beta nucleating agent and, depending on the conditions, predominantly the gamma crystal form exists. The beta form of polypropylene has unique benefits in several applications, e.g. in pipe extrusion, or injection molding. Beta nucleated polypropylene has significantly improved toughness compared to the non-nucleated or alpha-nucleated counterparts. However, the effect of the beta nucleation in Ziegler-Natta derived polypropylene is dependent on the molecular weight: The benefits of the beta nucleation are more pronounced when the molecular weight of the Ziegler-Natta derived polypropylene is rather high, i.e. the melt flow rate is rather low.

Beta nucleated Ziegler-Natta derived polypropylene copolymers are known for many years for example from EP 1344793 and EP 2055739. EP 1344793 is directed to a polyolefin composition with high impact strength and high gloss, comprising (A) a heterophasic propylene copolymer containing (a) 50 - 95 wt.% of a matrix phase comprising a propylene homopolymer or a propylene copolymer with up to 5 mol% of $\alpha$-olefin and/or ethylene and (b) 5-50 wt.% of a disperse phase comprising an ethylene rubber copolymer with from 20 - 80 mol% ethylene and from 80 - 20 mol% of at least one C3 -C8 $\alpha$-olefin and where the intrinsic viscosity (DIN ISO 1628-1) of the XCS-fraction (the fraction soluble in xylene at 23 °C according to ISO 6427) of the heterophasic copolymer is $\leq$ 2 dl/g, and (B) a $\beta$-nucleating agent. According to EP 1344793 any stereospecific catalyst for propylene polymerization which is capable of polymerizing and copolymerizing propylene and comonomers at a temperature of 40 to 110°C and at a pressure form 10 to 100 bar may be used. Ziegler Natta catalysts as well as metallocene catalysts have been mentioned. This amounts to an oversimplification, as numerous metallocene catalysts do not allow to arrive at beta phase contents of 75 % or higher.

A specific design problem of metallocene derived heterophasic polypropylene is ethylene content required in the soluble fraction of CRYSTEX analysis (or traditionally xylene soluble fraction). It is known from EP2891667 that good impact properties and low brittle ductile transition temperature require high amounts of ethylene in the xylene soluble fraction. This is a drawback as high ethylene content inevitably reduces the heat resistance of the polymer. High ethylene content is particularly a problem when it comes to film applications requiring high crystallization temperature.

The present invention is based on the surprising finding that beta nucleation of metallocene derived heterophasic polypropylene copolymers is suitable for providing simultaneously good low temperature impact at a given SF fraction (in CRYSTEX), high crystallization temperature and acceptable low brittle ductile transition temperature for a given melt flow rate.

### Summary of the Invention

The present invention provides a heterophasic propylene copolymer composition (HPPC), having an $MFR_2$ measured according to ISO 1133 at 230 °C and 2.16 kg in the range from 15.0 to 50 g/10 min and a beta-phase content of 75 to 95 %, measured by wide angle X-ray scattering (WAXS) as described herein, comprising

(a) a propylene homopolymer matrix, and
(b) an ethylene-propylene rubber being dispersed in said matrix,

wherein the heterophasic propylene copolymer composition (HPPC) has

(i) a content of 2,1-regiodefects determined by $^{13}$C-NMR of 0.2 to 0.8 mol% of the xylene cold insoluble fraction (XCI) according to ISO 16152;
(ii) a crystalline fraction (CF), determined according to CRYSTEX QC method ISO 6427 Annex B, present in an amount in the range from 50.0 to 95.0 wt.-%, relative to the total weight of the heterophasic propylene copolymer composition (HPPC); and
(iii) a soluble fraction (SF), determined according to CRYSTEX QC method ISO 6427 Annex B, present in an amount in the range from 5.0 to 50.0 wt.-%, relative to the total weight of the heterophasic propylene copolymer composition (HPPC); and

(iv) an ethylene content of the soluble fraction (SF), measured by Fourier Transform Infrared Spectroscopy (FTIR) during CRYSTEX analysis, in the range of 18.0 to 50.0 wt.-%; and

(v) an intrinsic viscosity of the soluble fraction (SF) measured according to ISO 1628-1 (at 135 °C in decalin), in the range from 2.0 to 6.0 dl/g; and

(vi) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 4.0.

The present invention further provides an article comprising more than 75 wt.-%, particularly more than 85 wt.-%, like more than 95 wt.-% of the heterophasic propylene polymer composition (HPPC) as described herein. Preferably, the article is a molded article, more preferably an injection molded article or a foam injection molded article.

The heterophasic propylene copolymer composition (HPPC) according to the present invention provides surprisingly low brittle-to-ductile transition temperatures (BDTT) at simultaneously low ethylene contents of the soluble fraction (SF) in Crystex analysis. Particularly, the brittle-to-ductile transition temperatures (BDTT) turned out to be surprisingly low for a given melt flow rate ($MFR_2$, determined according to ISO 1133 at 230°C and 2.16 kg load).

The content of 2,1-regiodefects determined by $^{13}C$-NMR preferably is from 0.4 to 0.7 mol% of the xylene cold insoluble fraction (XCI) according to ISO 16152.

Due to the differences in the separation methods using extraction by xylene and by 1,2,4-trichlorobenzene, the properties of XCS/XCI fractions on the one hand and soluble/crystalline (SF/CF) fractions on the other hand are not exactly the same, but are similar.

In a preferred aspect, the heterophasic propylene copolymer composition (HPPC) according the present invention has a melting temperature Tm, measured by DSC according to ISO 11357-3 (heating and cooling rate 10 °C/min), in the range of 152 to 162 °C, preferably 157 to 161°C. Said melting temperature originates from the alpha modification as present in the composition. The melting temperature of the beta modification usually will be within the range of 140 to 150 °C.

The heterophasic propylene copolymer composition (HPPC) according to present invention is further preferably characterized by a crystallization temperature Tc, measured by DSC ISO 11357-3 of 120 to 127 °C. Such crystallization temperature renders the composition particularly suitable for high processing speed and insensitive to the addition of other additives like pigments.

In yet a further preferred aspect, the heterophasic propylene copolymer composition (HPPC) according to the present invention has a crystalline fraction (CF), determined according to CRYSTEX QC method ISO 6427 Annex B, present in an amount in the range from 70.0 to 90.0 wt.-%, relative to the total weight of the heterophasic propylene copolymer composition (HPPC); and soluble fraction (SF), determined according to CRYSTEX QC method ISO 6427 Annex B, present in an amount in the range from 10.0 to 30.0 wt.-%, relative to the total weight of the heterophasic propylene copolymer composition (HPPC). Due to the high impact properties at a given total melt flow rate as obtained by the present invention, high elastomer amounts as reflected by high soluble fraction amounts can be avoided.

Independent therefrom, the heterophasic propylene copolymer composition (HPPC) according to the present invention preferably has an ethylene content of the soluble fraction (SF), measured by Fourier Transform Infrared Spectroscopy (FTIR) during CRYSTEX analysis, in the range of 20.0 to 30.0 wt.-%. Such low ethylene content is especially beneficial for high temperature uses.

The heterophasic propylene copolymer composition (HPPC) according to the present invention has an intrinsic viscosity of the soluble fraction (SF) measured according to ISO 1628-1 (at 135 °C in decalin), in the range from 2.0 to 6.0 dl/g, preferably 3.0 to 5.0 dl/g, more preferably 3.9 to 4.8 dl/g. A higher intrinsic viscosity, particularly 3.0 dl/g or higher, or even 3.9 dl/g or higher will be beneficial for impact and lower brittle-to-ductile transition temperature (BDTT), whereas a lower intrinsic viscosity, particularly below 3.0 dl/g will promote processability.

The heterophasic propylene copolymer composition (HPPC) according to the present invention preferably has a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 3.0 to 4.0. Such range is particularly beneficial when a good balance of impact and stiffness is desired.

The heterophasic propylene copolymer composition (HPPC) according to the present invention preferably has a brittle ductile transition temperature (Charpy notched impact strength measured according to ISO 179-1 eA) of below 15°C, more preferably below 11°C. It further self-explaining that a higher total melt flow rate will go hand in hand with higher, i.e. not so desirable brittle-to-ductile transition temperature (BDTT). However, the present invention is preferably characterized by a high difference of the melt flow rate of the heterophasic propylene copolymer composition (HPPC) $MFR_2$ measured according to ISO 1133 at 230 °C and 2.16 kg in 1/(g/10min) and brittle-to-ductile transition temperature (BDTT, based on Charpy notched impact strength measured according to ISO 179-1 eA) in 1/°C of at least 15, preferably at least 18. In other word, the present invention preferably fulfils the following equation:

$$\frac{\mathrm{MFR_2}\ (\mathrm{ISO\ 1133;\ 230\ ^\circ C;\ 2.16\ kg})[\frac{\mathrm{g}}{10\mathrm{min}}]}{g/10min} - \frac{BDTT[°C]}{°C} > 15$$

more preferably fulfils

$$\frac{\mathrm{MFR_2}\ (\mathrm{ISO\ 1133;\ 230\ ^\circ C;\ 2.16\ kg})[\frac{\mathrm{g}}{10\mathrm{min}}]}{g/10min} - \frac{BDTT[°C]}{°C} > 18$$

and most preferably fulfils

$$\frac{\mathrm{MFR_2}\ (\mathrm{ISO\ 1133;\ 230\ ^\circ C;\ 2.16\ kg})[\frac{\mathrm{g}}{10\mathrm{min}}]}{g/10min} - \frac{BDTT[°C]}{°C} > 20$$

In yet a further preferred aspect, the heterophasic propylene copolymer composition (HPPC) according to the present invention has an $MFR_2$ measured according to ISO 1133 at 230 °C and 2.16 kg in the range from 15.0 to 45.0 g/10 min. Independently therefrom, the heterophasic propylene copolymer composition (HPPC) according to the present invention preferably has a beta-phase content of 78 to 95 %, more preferably in the range of 85 to 95%, as measured by wide angle X-ray scattering (WAXS) as described in the experimental part.

The heterophasic propylene copolymer composition (HPPC) as described herein usually has a flexural modulus of 700 to 1100 MPa, like in the range of 750 to 1000 MPa, as measured according to ISO 178.

The heterophasic propylene copolymer composition (HPPC) according to present invention is usually made in a multistage process, whereby preferably the matrix is produced in the first two reactors of several reactors (such as 4) coupled in series such that the matrix has an isotactic pentad concentration [mmmm] as determined by $^{13}C$-NMR spectroscopy of more than 98.0%.

The heterophasic propylene copolymer composition (HPPC) according to the present invention usually includes a beta nucleating agent. Preferably the heterophasic propylene copolymer composition (HPPC) as described herein is obtained by mixing an intermediate heterophasic propylene copolymer with at least one beta nucleating agent (B) selected from the group of gamma-quinacridone pigments, N,N-dicylohexyl-2,6-naphthalene dicarboxamide and Ca-salts of pimelic or suberic acid. The most preferred beta nucleating agent (B) is 5,12-dihydroquinolino[2,3-b]acridine-6,7,13,14-tetrone.

In the following, the process for preparing the heterophasic polypropylene composition according to the present invention shall be described in more detail.

For the preparation of the heterophasic polypropylene composition according to the present invention specific catalyst systems should be used. Such catalyst systems are obtainable by a metallocene catalyst complex and a co-catalyst as described in the following.

Preferred complexes of the metallocene catalyst include:

rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-(4'-tert-butylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl][2-methyl-4-(3',5'-dimethylphenyl)-5-methoxy-6-tert-butylinden-1-yl] zirconium dichloride.

Cocatalyst

To form an active catalytic species it is necessary to employ a cocatalyst as is well known in the art. According to the present invention a cocatalyst system comprising a boron containing cocatalyst and an aluminoxane cocatalyst is used in combination with the above defined metallocene catalyst complex.
The aluminoxane cocatalyst can be one of formula (I):

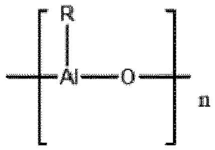

(I)

where n is from 6 to 20 and R has the meaning below.
Aluminoxanes are formed on partial hydrolysis of organoaluminum compounds, for example those of the formula AlR3, AlR2Y and Al2R3Y3 where R can be, for example, C1-C10-alkyl, preferably C1-C5-alkyl, or C3-C10-cycloalkyl, C7-C12-arylalkyl or -alkylaryl and/or phenyl or naphthyl, and where Y can be hydrogen, halogen, preferably chlorine or bromine, or C1-C10-alkoxy, preferably methoxy or ethoxy. The resulting oxygen-containing aluminoxanes are not in general pure compounds but mixtures of oligomers of the formula (I).
The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.
Also a boron containing cocatalyst is used in combination with the aluminoxane cocatalyst.
The catalyst complex ideally comprises a co-catalyst, certain boron containing cocatalysts are preferred. Especially preferred borates of use in the invention therefore comprise the trityl, i.e. triphenylcarbenium, ion. Thus the use of Ph3CB(PhF5)4 and analogues therefore are especially favoured.
The catalyst system of the invention is used in supported form. The particulate support material used is silica or a mixed oxide such as silica-alumina, in particular silica.
The use of a silica support is preferred. The skilled man is aware of the procedures required to support a metallocene catalyst.
In a preferred embodiment, the catalyst system corresponds to the ICS3 of
WO 2020/239602 A1.
The heterophasic propylene copolymer according to the present invention is made by a multistage process. It is highly recommendable to use a combination of loop reactor(s) and gas phase reactor(s).
Polymerization in the process may be effected in at least one liquid slurry reactor, or in at least two or more, e.g. 2, 3 or 4, polymerization reactors of which at least one reactor is a gas phase reactor. The process may also involve a prepolymerization step. This prepolymerization step is a conventional step used routinely in polymer synthesis.
In one embodiment, the polymerization process for producing the propylene homopolymer matrix employs one liquid slurry reactor combined with a prepolymerization reactor. The elastomer phase dispersed in said matrix is made in a second and optional third reactor, whereby these reactors are gas phase reactors.
In a preferred embodiment, the matrix is prepared in the first two reactors. Those first two reactors are preferably a loop reactor and a gas phase reactor downstream thereof. In this embodiment a prepolymerization step is preferably applied.
According to the present invention the amorphous propylene-ethylene copolymer, i.e. the elastomer dispersed in the matrix is formed in a gas phase reactor.
For liquid slurry and gas phase copolymerization reactions, the reaction temperature used will generally be in the range of 60 to 115°C (e.g. 70 to 90°C), the reactor pressure will generally be in the range 10 to 25 bar for gas phase reactions with liquid slurry polymerization operating at higher pressures, such as 30 to 60 bar. The residence time will generally be 0.25 to 8 hours (e.g. 0.5 to 4 hours). The gas used will be the monomer optionally as mixture with a nonreactive gas such as nitrogen or propane. It is a particular feature of the invention that polymerization takes place at temperatures of at least 60°C. For the purpose of this invention, the slurry polymerization in liquid monomer is also referred to as the bulk step.
Generally, the quantity of catalyst used will depend upon the nature of the catalyst, the reactor types and conditions and the properties desired for the polymer product. As is well known in the art hydrogen can be used for controlling the molecular weight of the polymer.
Production splits between the various reactors can vary and are adjusted such that the relative amounts are

obtained.
Viewed from another aspect the invention provides a process for the preparation of the inventive heterophasic polypropylene copolymer comprising:

(I) polymerizing propylene in bulk in the presence of a catalyst system as herein defined to form a polypropylene homopolymer;
(II) in the presence of said homopolymer and said catalyst system and in the gas phase, polymerizing propylene to form a polypropylene homopolymer matrix;
(III) in the presence of said matrix and said catalyst system and in the gas phase, polymerizing propylene and ethylene to form a heterophasic polypropylene copolymer comprising a homopolymer matrix and an ethylene propylene rubber (EPR) dispersed therein.

This intermediate is then subjected to beta nucleation to form the heterophasic polypropylene copolymer composition (HPPC) according to the present invention.

**Detailed description**

In the following a number of particularly preferred embodiments shall be described.
A first particularly preferred embodiment, is concerned with
a heterophasic propylene copolymer composition (HPPC), having an $MFR_2$ measured according to ISO 1133 at 230 °C and 2.16 kg in the range from 15.0 to 50 g/10 min and a beta-phase content of 85 to 95 %, measured by wide angle X-ray scattering (WAXS) as described herein, comprising

(a) a propylene homopolymer matrix, and
(b) an ethylene-propylene rubber being dispersed in said matrix,
wherein the heterophasic propylene copolymer composition (HPPC) has

(i) a content of 2,1-regiodefects determined by $^{13}C$-NMR of 0.2 to 0.8 mol% of the xylene cold insoluble fraction (XCI) according to ISO 16152;
(ii) a crystalline fraction (CF), determined according to CRYSTEX QC method ISO 6427 Annex B, present in an amount in the range from 70.0 to 90.0 wt.-%, relative to the total weight of the heterophasic propylene copolymer composition (HPPC); and
(iii) a soluble fraction (SF), determined according to CRYSTEX QC method ISO 6427 Annex B, present in an amount in the range from 10.0 to 30.0 wt.-%, relative to the total weight of the heterophasic propylene copolymer composition (HPPC); and
(iv) an ethylene content of the soluble fraction (SF), measured by Fourier Transform Infrared Spectroscopy (FTIR) during CRYSTEX analysis, in the range of 20.0 to 30.0 wt.-%; and
(v) an intrinsic viscosity of the soluble fraction (SF) measured according to ISO 1628-1 (at 135 °C in decalin), in the range from 3.0 to 5.0 dl/g; and
(vi) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 4.0.

Any preferred aspect as described in the summary of the invention may be combined with this embodiment as far as appropriate. Reference is made to the aforesaid.
A second particularly preferred embodiment, is concerned with
a heterophasic propylene copolymer composition (HPPC), having an $MFR_2$ measured according to ISO 1133 at 230 °C and 2.16 kg in the range from 15.0 to 50 g/10 min and a beta-phase content of 75 to 95 %, measured by wide angle X-ray scattering (WAXS) as described herein, comprising

(a) a propylene homopolymer matrix, and
(b) an ethylene-propylene rubber being dispersed in said matrix,

wherein the heterophasic propylene copolymer composition (HPPC) has

(vii) a content of 2,1-regiodefects determined by $^{13}C$-NMR of 0.4 to 0.7 mol% of the xylene cold insoluble fraction (XCI) according to ISO 16152;
(viii) a crystalline fraction (CF), determined according to CRYSTEX QC method ISO 6427 Annex B, present in an

amount in the range from 50.0 to 95.0 wt.-%, relative to the total weight of the heterophasic propylene copolymer composition (HPPC); and
(ix) a soluble fraction (SF), determined according to CRYSTEX QC method ISO 6427 Annex B, present in an amount in the range from 5.0 to 50.0 wt.-%, relative to the total weight of the heterophasic propylene copolymer composition (HPPC); and
(x) an ethylene content of the soluble fraction (SF), measured by Fourier Transform Infrared Spectroscopy (FTIR) during CRYSTEX analysis, in the range of 18.0 to 50.0 wt.-%; and
(xi) an intrinsic viscosity of the soluble fraction (SF) measured according to ISO 1628-1 (at 135 °C in decalin), in the range from 3.0 to 5.0 dl/g; and
(xii) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 4.0; and
a crystallization temperature Tc, measured by DSC ISO 11357-3 of 120 to 127°.

Any preferred aspect as described in the summary of the invention may be combined with this embodiment as far as appropriate. Reference is made to the aforesaid.

A third particularly preferred embodiment, is concerned with
A heterophasic propylene copolymer composition (HPPC), having an $MFR_2$ measured according to ISO 1133 at 230 °C and 2.16 kg in the range from 15.0 to 45 g/10 min and a beta-phase content of 75 to 95 %, measured by wide angle X-ray scattering (WAXS) as described herein, comprising

(a) a propylene homopolymer matrix, and
(b) an ethylene-propylene rubber being dispersed in said matrix,

wherein the heterophasic propylene copolymer composition (HPPC) has

(xiii) a content of 2,1-regiodefects determined by $^{13}$C-NMR of 0.4 to 0.7 mol% of the xylene cold insoluble fraction (XCI) according to ISO 16152;
(xiv) a crystalline fraction (CF), determined according to CRYSTEX QC method ISO 6427 Annex B, present in an amount in the range from 50.0 to 95.0 wt.-%, relative to the total weight of the heterophasic propylene copolymer composition (HPPC); and
(xv) a soluble fraction (SF), determined according to CRYSTEX QC method ISO 6427 Annex B, present in an amount in the range from 5.0 to 50.0 wt.-%, relative to the total weight of the heterophasic propylene copolymer composition (HPPC); and
(xvi) an ethylene content of the soluble fraction (SF), measured by Fourier Transform Infrared Spectroscopy (FTIR) during CRYSTEX analysis, in the range of 18.0 to 50.0 wt.-%; and
(xvii) an intrinsic viscosity of the soluble fraction (SF) measured according to ISO 1628-1 (at 135 °C in decalin), in the range from 3.0 to 5.0 dl/g; and
a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 4.0, and
a melting temperature Tm, measured by DSC according to ISO 11357-3 (heating and cooling rate 10 °C/min), in the range of 152 to 162 °C; and
a crystallization temperature Tc, measured by DSC ISO 11357-3 of 120 to 127 °.

Any preferred aspect as described in the summary of the invention may be combined with this embodiment as far as appropriate. Reference is made to the aforesaid.

The invention will now be illustrated by reference to the following non-limiting Examples.

## Experimental Part

### a) Measurement methods

#### aa) Melt Flow Rate

The melt flow rate ($MFR_2$) is determined according to ISO 1133 and is indicated in g/10min. The $MFR_2$ of heterophasic propylene copolymer is determined at a temperature of 230 °C and under a load of 2.16 kg.

**bb) Wide angle X-ray Scattering measurement (WAXS)**

The measurement of wide-angle X-ray scattering (WAXS) of the samples was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and 28 angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined with the area under the crystalline curve and the original spectrum using Challa, Hermans and Weidinger method [Challa G, Hermans PH, Weidinger A, Makromol. Chem. 56, 169 (1962)] as:

$$X_c = \frac{\text{area under crystalline curve}}{\text{area under original spectrum}} \times 100$$

The amount of β-form of the polypropylene within the crystalline phase Kβ is calculated using Jones method [Turner-Jones A, Aizlewood JM, Beckett DR, Makromol. Chem. 75, 134 (1974)] according to the following equation

$$K_\beta = \frac{I^\beta(300)}{I^\alpha(110) + I^\alpha(040) + I^\alpha(130) + I^\beta(300)}$$

where, Iβ(300) is the intensity of β(300) peak, Iα(110) is the intensity of a(110) peak, Iα(040) is the intensity of a(040) peak and la(130) is the intensity of a(130) peak obtained after subtracting the amorphous halo.

The amount of γ-form of isotactic polypropylene (iPP) within the crystalline phase Kγ is calculated using the method developed by Pae [Pae KD, J. Polym. Sci., Part A, 6, 657 (1968)] as:

$$K_\gamma = \frac{I^\gamma(117)}{I^\alpha(130) + I^\gamma(117)}$$

where Iα(130) is the intensity of a(130) peak and Iγ(117) is the intensity of γ(117) peak obtained after subtracting a base line joining the base of these peaks.

Quantification of three-phase crystalline system has been carried out following the procedure explained in Obadal M, Cermak R, Stoklasa K, Macromol. Rapid Commun. 26, 1253 (2005). For three-phase crystalline systems the following equations have been used to determine Kα (amount of α-phase), Kβ (amount of β- phase) and Kγ (amount of γ-phase):

$$K_\beta = \frac{I^\beta(300)}{I^\alpha(110) + I^\alpha(040) + I^\alpha(130) + I^\beta(300) + I^\gamma(117)}$$

$$K_{\alpha+\gamma} = 1 - K_\beta ,$$

$$K_\gamma = G \times K_{\alpha+\gamma},$$

and

$$K_\alpha = 1 - K_\beta - K_\gamma$$

Compression molding:

Samples for WAXS measurements have been prepared according to ISO 173-2, on a frame mold. The conditions for compression molding of test specimens were as follows:

| | |
|---|---|
| Molding temperature | 210 °C |
| Average cooling rate | 15 °C/min |
| Demolding temperature | ≤ 40°C |
| Full Pressure | 5 MPa |
| Full-pressure time | 5 min |
| Preheating pressure | None |
| Preheating time | 10 min |

**cc) Quantification of microstructure by NMR spectroscopy**

Quantitative nuclear-magnetic resonance (NMR) spectroscopy was used to quantify the isotacticity and regio-regularity of the matrix component of the heterophasic copolymer (on samples taken after the first gas phase reactor (GPR1).

Quantitative $^{13}C\{^1H\}$ NMR spectra were recorded in the solution-state using a Bruker Advance III 400 NMR spectrometer operating at 400.15 and 100.62 MHz for 1H and 13C respectively. All spectra were recorded using a $^{13}C$ optimised 10 mm extended temperature probehead at 125 °C using nitrogen gas for all pneumatics.

For propylene homopolymers approximately 200 mg of material was dissolved in 1,2-tetrachloroethane-d2 (TCE-d2). To ensure a homogenous solution, after initial sample preparation in a heat block, the NMR tube was further heated in a rotatary oven for at least 1 hour. Upon insertion into the magnet, the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectrum.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically, the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{21e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.\text{-}\% = 100 * (P21e / Ptotal)$$

**dd) Xylene cold soluble fraction (XCS)**

"Xylene Cold Soluble" (XCS) fraction and "Xylene Cold Insoluble" (XCI) fraction, respectively, is determined according to standard gravimetric method as per ISO 16152.

**ee) Crystex analysis**

***Crystalline and soluble fractions method***

The crystalline fraction (CF) and soluble fraction (SF) of the heterophasic propylene copolymers, the final comonomer content of the heterophasic propylene copolymers, the comonomer content of the respective fractions as well as the intrinsic viscosities of the respective fractions were analyzed by the CRYSTEX QC, Polymer Char (Valencia, Spain) on basis ISO 6427 Annex B: 1992 (E). A schematic representation of the CRYSTEX QC instrument is shown in Figure 1a. The crystalline and amorphous fractions are separated through temperature cycles of dissolution in 1,2,4-trichlorobenzene (1,2,4-TCB) at 160 °C, crystallization at 40 °C and re-dissolution in 1,2,4-TCB at 160 °C as shown in Figure 1b. Quantification of SF and CF and determination of ethylene content (C2) are achieved by means of an infrared detector (IR4) and an online 2-capillary viscometer is used for the determination of the intrinsic viscosity (iV). IR4 detector is a multiple wavelength detector measuring IR absorbance at two different bands ($CH_3$ stretching vibration (centred at approx. 2960 $cm^{-1}$) and $CH_x$ stretching vibration (2700-3000 $cm^{-1}$) which can be used to determine of the concentration and the ethylene content in ethylene-propylene copolymers (EP Copolymers). The IR4 detector is calibrated with series of 8 ethylene-propylene copolymers with known ethylene content in the range of 2 wt.-% to 69 wt.-% (determined by $^{13}C$-NMR) and each at various concentrations, in the range of 2 and 13 mg/ml. To account for both features, concentration and ethylene content at the same time for various polymer concentration expected during Crystex analyses the following calibration equations were applied:

**Equation 1:**

$$Conc = a + b*Abs(CH) + c*(Abs(CH_x))^2 + d*Abs(CH_3) + e*(Abs(CH_3))^2 + f*Abs(CH_x)*Abs(CH_3)$$

**Equation 2:**

$$CH_3/1000C = a + b*Abs(CH_x) + c*Abs(CH_3) + d*(Abs(CH_3)/Abs(CH_x)) + e*(Abs(CH_3)/Abs(CH_x))^2$$

The constants a to e for equation 1 and a to f for equation 2 were determined by using least square regression

analysis.

**Equation 3**:

The CH3/1000C is converted to the ethylene content in wt.-% using following relationship:

$$\text{wt.-\% (Ethylene in EP Copolymers)} = 100 - CH_3/1000TC * 0.3$$

Amount of soluble fraction (SF) and crystalline fraction (CF) are correlated through the XS calibration to the "Xylene Cold Soluble" (XCS) fraction and "Xylene Cold Insoluble" (XCI) fraction, respectively, determined according to standard gravimetric method as per ISO16152. XS calibration is achieved by testing various EP copolymers with xylene cold soluble (XCS) content in the range 2 to 31 wt.-%. The determined XS calibration is linear

(**Equation 4**):

$$\text{wt.-\% XCS} = 1.01 * \text{wt.-\% SF}$$

Intrinsic viscosity (IV) of the parent heterophasic propylene copolymer and its soluble fraction (SF) and crystalline fraction (CF) are determined with a use of an online 2-capillary viscometer and are correlated to corresponding IV's determined by standard method in decalin according to ISO 1628-3. Calibration is achieved with various EP copolymers with IV = 2 to 4 dl/g. The determined calibration curve between the Vsp, measured in CRYSTEX QC and normalized by the concentration (c), and the IV is linear (Equation 5):

$$IV\ (dl/g) = a * Vsp/c$$

with a slope of a = 16.2. A sample of the heterophasic propylene copolymer to be analyzed is weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, polymer solution is blanketed with the $N_2$ atmosphere during dissolution.

As shown in Figure 1a and b, a defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the heterophasic propylene copolymer. During the second injection the soluble fraction (SF; at low temperature, 40 °C) and the crystalline fraction (CF; at high temperature, 160 °C) with the crystallization cycle are measured (wt.-% SF, wt.-% C2 of SF, IV of SF).

**$^{13}C$ NMR spectroscopy-based determination of C2 content for the calibration standards**

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of *1,2*-tetrachloroethane-$d_2$ (TCE-$d_2$) along with chromium (III) acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer:

$$fE = (E / (P + E))$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to

$$E = 0.5(S\beta\beta + S\beta\gamma + S\beta\delta + 0.5( S\alpha\beta + S\alpha\gamma))$$

Through the use of this set of sites the corresponding integral equation becomes

$$E = 0.5(I_H + I_G + 0.5(I_C + I_D ))$$

using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction:

$$E\,[mol\%] = 100 * fE.$$

The weight percent comonomer incorporation was calculated from the mole fraction:

$$E\,[wt\%] = 100 * (fE * 28.06) / ((fE * 28.06) + ((1-fE) * 42.08))$$

**ff) Intrinsic viscosity**

The intrinsic viscosity (iV) is measured in analogy to DIN ISO 1628/1, October 1999, in Decalin at 135 °C.

**gg) Melting temperature $T_m$ and crystallization temperature $T_c$**

The melting temperature $T_m$ is determined by differential scanning calorimetry (DSC) according to ISO 11357-3 with a TA-Instruments 2920 Dual-Cell with RSC refrigeration apparatus and data station. A heating and cooling rate of 10 °C/min is applied in a heat/cool/heat cycle between +23 and +210 °C. The crystallization temperature ($T_c$) is determined from the cooling step while melting temperature ($T_m$) and melting enthalpy ($H_m$) are being determined in the second heating step.

**hh) Brittle-to-ductile transition temperature (BDTT)**

The determination of the brittle-to-ductile transition temperature (BDTT) is based on the a(cN) values as determined from Charpy instrumented impact strength according to ISO 179-2:2000 on V-notched specimen with a geometry of 80x10x4 $mm^3$ as required in ISO 179-1eA.

The a(cN) values are determined in intervals of 3°C from -40°C to +41°C with an impact velocity of 1.5 m/s and plotted over temperature, calculating the BDTT as the average value of the step increase. For a detailed description of the determination of the BDTT reference is made to Grein, C. et al, Impact Modified Isotactic Polypropylene with Controlled Rubber Intrinsic Viscosities: Some New Aspects About Morphology and Fracture, J Appl Polymer Sci, 87 (2003), 1702-1712.

**ii) Notched impact strength (NIS)**

The Charpy notched impact strength (NIS) was measured according to ISO 179 1 eA at - 20 °C, 0 °C and +23

°C, using injection molded bar test specimens of 80x10x4 $mm^3$ prepared in accordance with ISO 294-1: 1996.

**jj) Flexural Modulus**

The flexural modulus was determined in 3-point-bending at 23 °C according to ISO 178 on 80x10x4 $mm^3$ test bars injection molded in line with EN ISO 1873-2.

**b) Experiments - Preparation of the heterophasic propylene copolymers**

**ba) Preparation of the catalyst systems (catalyst system 1 for inventive example** IE1 **and comparative example CE1)**

**Catalyst synthesis**

The metallocene (MC) used was Anti-dimethylsilanediyl[2-methyl-4,8-di(3,5-dimethylphenyl)-1,5,6,7-tetrahydro-s-indacen-1-yl][2-methyl-4-(3,5-dimethylphenyl)-5-methoxy-6-tert-butylinden-1-yl] zirconium dichloride as disclosed in WO2020/239602.

**Preparation of MAO-silica support** (as described in WO2020/239602 at page 57) A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressuring and depressurising with nitrogen using manual valves. Then toluene (22 kg) was added. The mixture was stirred for 15 min. Next 30 wt% solution of MAO in toluene (9.0 kg) from Lanxess was added via feed line on the top of the reactor within 70 min. The reaction mixture was then heated up to 90°C and stirred at 90 °C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight.

**Catalyst preparation** (as described in WO2020/239602 as ICS3) 30 wt% MAO in toluene (0.7 kg) was added into a steel nitrogen blanked reactor via a burette at 20 °C. Toluene (5.4 kg) was then added under stirring. The MC as cited above (93 g) was added from a metal cylinder followed by flushing with 1 kg toluene. The mixture 5 was stirred for 60 minutes at 20 °C . Trityl tetrakis(pentafluorophenyl) borate (91 g) was then added from a metal cylinder followed by a flush with 1 kg of toluene. The mixture was stirred for 1 h at room temperature. The resulting solution was added to a a stirred cake of MAO-silica support prepared as described above over 1 hour. The cake was allowed to stay for 12 hours, followed by drying under N2 flow at 60°C for 2h and additionally for 5 h 10 under vacuum (-0.5 barg) under stirring. Dried catalyst was sampled in the form of pink free flowing powder containing 13.9% Al by weight and 0.11% Zr by weight.

**bb) Preparation of the catalyst systems (catalyst system 2 for comparative examples CE2 and CE3)**

For polymerizing the homopolymer of comparative examples CE2 and CE3 the catalyst system WO 2020/160892 A1, catalyst C described at page 27.

**bc) Preparation of inventive polymer**

**Table 1:** Polymerization conditions for IE1

| | | **IE1** |
|---|---|---|
| **Catalyst system** | | 1 |
| **Prepolymerization** | | |
| Temperature | [°C] | 20 |
| H2/C3 ratio | [mol/kmoll] | 0.02 |
| Residence time | [h] | 0.2 |

(continued)

| | | |
|---|---|---|
| **Loop (Reactor 1)** | | |
| Temperature | [°C] | 75 |
| Pressure | [kPa] | 5300 |
| H2/C3 ratio | [mol/kmol] | 0.63 |
| Loop reactor split | [wt.-%] | 46 |
| $MFR_2$ | [g/10min] | 81 |
| **GPR1 (Reactor 2)** | | |
| Temperature | [°C] | 80 |
| Pressure | [kPa] | 2600 |
| H2/C3 ratio | [mol/kmol] | 1.80 |
| GPR1 reactor split | [wt.-%] | 25 |
| XCS after GPR1 | [wt.-%] | 0.15 |
| $MFR_2$ | [g/10min] | 95 |
| **GPR2 (Reactor 3)** | | |
| Temperature | [°C] | 70 |
| Pressure | [kPa] | 2500 |
| H2/C2 ratio | [mol/kmol] | 0.0 |
| C2/C3 ratio | [mol/kmol] | 860 |
| GPR2 reactor split | [wt.-%] | 20 |
| XCS after GPR2 | [wt.-%] | 14.7 |
| **GPR3 (Reactor 4)** | | |
| Temperature | [°C] | 75 |
| Pressure | [kPa] | 2200 |
| C2/C3 ratio | [mol/kmol] | 1675 |
| H2/C2 ratio | [mol/kmol] | 1.8 |
| GPR3 reactor split | [%] | 9 |

The product from GPR3 (reactor 4) was compounded and pelletized in the presence of a conventional additive package including antioxidant (Irganox B215, BASF AG, Germany; 0.15 wt.-%) and acid scavenger (Ca stearate CAS no. 1592-23-0, Faci SpA, Italy; 0.05 wt.-%). In the case of IE1 and CE2, beta nucleation was induced by additionally compounding 0.01 wt.-% of quinacridonequinone (IUPAC name 5,12-dihydroquinolino[2,3-b]acridine-6,7,13,14-tetrone, CAS number 1503-48-6; distributed by BASF AG, Germany). A twin-screw extruder (type TSE24) was used for compounding at a melt temperature of 200-220°C.

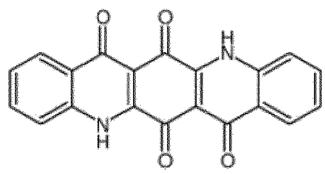

Comparative examples CE2 and CE3 (both polypropylene homopolymers, beta-nucleated and non-nucleated) were made in a similar way as the matrix component included in IE1 and CE1. These are identical to inventive example IE3 (beta-nucleated) and comparative example CE4 (non-nucleated) of WO 2020/160892 A1.

Results are shown in Table 2.

**Table 2:** Results

| | IE1 | CE1 | CE2 | CE3 |
|---|---|---|---|---|
| Catalyst system | 1 | 1 | 2 | 2 |
| MFR(HPPC) g/10min, ISO 1133; 230°; 2.16kg | 31 | 31 | 0.26 | 0.26 |
| Beta content (WAXS) | 87.5 | 0 | 83.0 | 0 |
| PP homo matrix | yes | yes | PP homo | PP homo |
| EPR dispersed | yes | yes | | |
| 2.1 regioinversion ($^{13}$C-NMR) of XCI mol% | 0.6 | 0.6 | 0.9 | 0.9 |
| CF (Crystex QC) wt.-% | 79.9 | 79.9 | 99.8 | 99.8 |
| SF (Crystex QC) wt.-% | 20.1 | 20.1 | 0.2 | 0.2 |
| C2(SF) FTIR | 24.0 | 24.0 | - | - |
| IV(SF) dl/g; | 4.4 | 4.4 | - | - |
| IV(CF) dl/g; | 1.3 | 1.3 | - | - |
| IV(SF) / IV (CF) | 3.4 | 3.4 | - | - |
| Tm ISO 11357-3 °C | 158 | 156 | 162 | 160 |
| Tc ISO 11357-3 °C | 121 | 113 | 121 | 116 |
| BDTT (NIS 179-1eA) °C | 10 | 22 | nd | nd |
| Delta (MFR - BDTT) | 21 | 9 | nd | nd |
| Flexural modulus ISO 178; MPa | 806 | 960 | 1609 | 1751 |
| Mmmm; $^{13}$C NMR (matrix) % | 99.8 | nd | nd | |
| Beta nucleating agent: 5,12-dihydroquinolino[2,3-b]acridine-6,7,13,14-tetrone, | Yes 0.01 wt.-% | | Yes 0.01 wt.-% | |
| Charpy NIS 23°C kJ/m$^2$ | 31.1 | 5.7 | 61.2 | 6.1 |
| Charpy NIS 0°C kJ/m | 12.0 | 3.7 | 3.6 | 2.0 |
| Charpy NIS -20°C kJ/m | 5.5 | 3.3 | n.d. | n.d. |
| improvement Charpy NIS -20°C [percent]nucleated vs. unnucleated | 67 | | | |
| Ratio of Charpy NIS-20°C [kJ/m] / SF [wt.-%] | 0.27 | 0.16 | | |

It can be seen that the inventive composition IE1 had

- a surprisingly low brittle-to-ductile transition temperature (BDTT) for its melt flow rate being directly reflected in the parameter [MFR minus BDTT];
- a beneficial high melting temperature;
- high flexibility in terms of IV(SF)/IV(CF) ratio;
- outstanding high crystallization temperature;
- a surprisingly improved ratio of Charpy NIS -20°C [kJ/m] / SF [wt.-%]

## Claims

1. A heterophasic propylene copolymer composition (HPPC), having an $MFR_2$ measured according to ISO 1133 at 230 °C and 2.16 kg in the range from 15.0 to 50.0 g/10 min and a beta-phase content of 75 to 95 %, measured by

wide angle X-ray scattering (WAXS) as described herein, comprising

(a) a propylene homopolymer matrix, and
(b) an ethylene-propylene rubber being dispersed in said matrix, wherein the heterophasic propylene copolymer composition (HPPC) has

(i) a content of 2,1-regiodefects determined by $^{13}$C-NMR of 0.2 to 0.8 mol% of the xylene cold insoluble fraction (XCI) according to ISO 16152;
(ii) a crystalline fraction (CF), determined according to CRYSTEX QC method ISO 6427 Annex B, present in an amount in the range from 50.0 to 95.0 wt.-%, relative to the total weight of the heterophasic propylene copolymer composition (HPPC); and
(iii) a soluble fraction (SF), determined according to CRYSTEX QC method ISO 6427 Annex B, present in an amount in the range from 5.0 to 50.0 wt.-%, relative to the total weight of the heterophasic propylene copolymer composition (HPPC); and
(iv) an ethylene content of the soluble fraction (SF), measured by Fourier Transform Infrared Spectroscopy (FTIR) during CRYSTEX analysis, in the range of 18.0 to 50.0 wt.-%; and
(v) an intrinsic viscosity of the soluble fraction (SF) measured according to ISO 1628-1 (at 135 °C in decalin), in the range from 2.0 to 6.0 dl/g; and
(vi) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 1.0 to 4.0.

**2.** The heterophasic propylene copolymer composition (HPPC) according to claim 1, having
(vii) a melting temperature Tm, measured by DSC according to ISO 11357-3 (heating and cooling rate 10 °C/min), in the range of 152 to 162 °C.

**3.** The heterophasic propylene copolymer composition (HPPC) according to claim 1 or 2, having a crystallization temperature Tc, measured by DSC ISO 11357-3 of 120 to 127 °.

**4.** The heterophasic propylene copolymer composition (HPPC) according to any one of the preceding claims, having

(ii) a crystalline fraction (CF), determined according to CRYSTEX QC method ISO 6427 Annex B, present in an amount in the range from 70.0 to 90.0 wt.-%, relative to the total weight of the heterophasic propylene copolymer composition (HPPC); and
(iii) a soluble fraction (SF), determined according to CRYSTEX QC method ISO 6427 Annex B, present in an amount in the range from 10.0 to 30.0 wt.-%, relative to the total weight of the heterophasic propylene copolymer composition (HPPC).

**5.** The heterophasic propylene copolymer composition (HPPC) according to any one of the preceding claims, having (iv) an ethylene content of the soluble fraction (SF), measured by Fourier Transform Infrared Spectroscopy (FTIR) during CRYSTEX analysis, in the range of 20.0 to 30.0 wt.-%.

**6.** The heterophasic propylene copolymer composition (HPPC) according to any one of the preceding claims, having (v) an intrinsic viscosity of the soluble fraction (SF) measured according to ISO 1628-1 (at 135 °C in decalin), in the range from 3.0 to 5.0 dl/g, preferably 3.9 to 4.8 dl/g.

**7.** The heterophasic propylene copolymer composition (HPPC) according to any one of the preceding claims, having (vi) a ratio of the intrinsic viscosity of the soluble fraction (SF) measured according to ISO 1628-1 (at 135 °C in decalin) versus the intrinsic viscosity of the crystalline fraction (CF) measured according to ISO 1628-1 (at 135 °C in decalin) IV(SF)/IV(CF) in the range of 3.0 to 4.0.

**8.** The heterophasic propylene copolymer composition (HPPC) according to any one of the preceding claims, having one or more of the following properties:

- brittle to ductile transition temperature (Charpy notched impact strength measured according to ISO 179-1 eA) of below 15°C, preferably below 11°C;
- difference of the melt flow rate of the heterophasic propylene copolymer composition (HPPC) $MFR_2$ measured according to ISO 1133 at 230 °C and 2.16 kg in 1/(g/10min) and brittle to ductil transition temperature (Charpy

notched impact strength measured according to ISO 179-1 eA) in 1/°C of at least 15, preferably at least 18.

**9.** The heterophasic propylene copolymer composition (HPPC) according to any one of the preceding claims, having an $MFR_2$ measured according to ISO 1133 at 230 °C and 2.16 kg in the range from 15.0 to 45.0 g/10 min.

**10.** The heterophasic propylene copolymer composition (HPPC) according to any one of the preceding claims having a beta-phase content of 78 to 95 %, preferably 85 to 95% measured by wide angle x-ray scattering (WAXS) as described herein.

**11.** The heterophasic propylene copolymer composition (HPPC) according to any one of the preceding claims having a flexural modulus of 750 to 1000 MPa according to ISO 178.

**12.** The heterophasic propylene copolymer composition (HPPC) according to any one of the preceding claims obtainable by a multistage process, whereby in the first two stages the matrix is produced and wherein the matrix has an isotactic pentad concentration [mmmm] as determined by $^{13}C$-NMR spectroscopy of more than 98.0%.

**13.** The heterophasic propylene copolymer composition (HPPC) according to any one of the preceding claims obtainable by mixing an intermediate heterophasic propylene copolymer with at least one beta nucleating agent (B) selected from the group of gamma-quinacridone and N,N-dicylohexyl-2,6-naphthalene dicarboxamide, preferably being 5,12-dihydroquinolino[2,3-b]acridine-6,7,13,14-tetrone.

**14.** The heterophasic propylene copolymer composition (HPPC) according to any one of the preceding claims having a content of 2,1-regiodefects determined by $^{13}C$-NMR of 0.4 to 0.7 mol% of the xylene cold insoluble fraction (XCI) according to ISO 16152.

**15.** An article comprising more than 75 wt.-%, particularly more than 90 wt.-% of the heterophasic propylene polymer composition (HPPC) according to any one of the preceding claims, preferably wherein the article is a molded article, more preferably an injection molded article or a foam injection molded article.

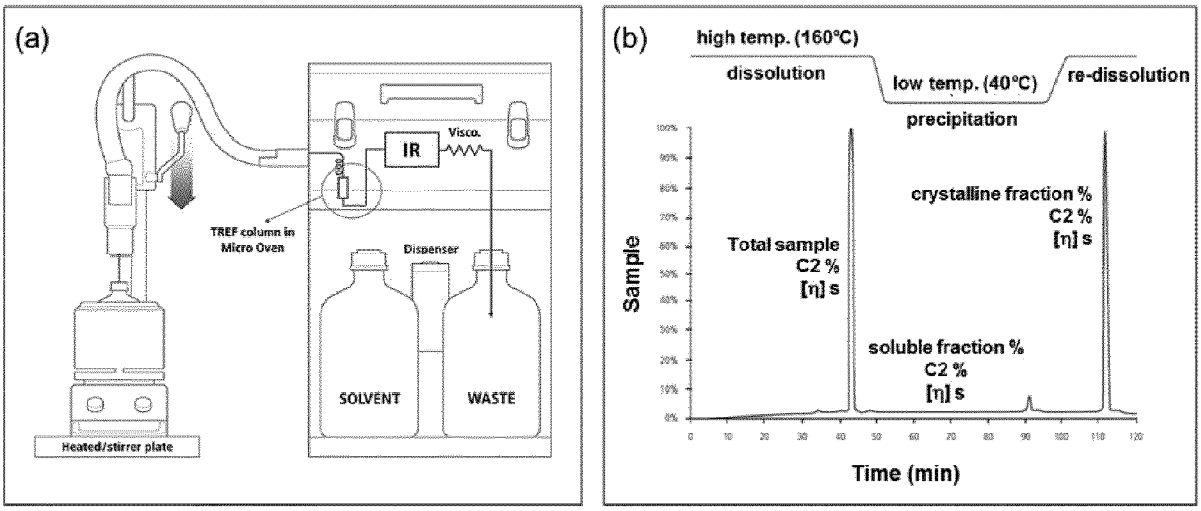


**Figure 1:** (a) Schematic diagram of the CRYSTEX QC instrument (b) Elution of the EP copolymer sample and obtained soluble and crystalline fractions in the TREF column (column filled with inert material e.g. glass beads) (see Del Hierro, P.; Ortin, A.; Monrabal, B.; 'Soluble Fraction Analysis in polypropylene

Europäisches Patentamt
European Patent Office
Office européen des brevets

# EUROPEAN SEARCH REPORT

Application Number
EP 21 17 0614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 055 739 A1 (BOREALIS TECH OY [FI]) 6 May 2009 (2009-05-06) * example ie1 * ----- | 1-15 | INV. C08L23/12 |
| X | EP 3 450 472 A1 (BOREALIS AG [AT]) 6 March 2019 (2019-03-06) * example ie * ----- | 1-15 | |

TECHNICAL FIELDS SEARCHED (IPC)
C08L

The present search report has been drawn up for all claims

1

| Place of search | Date of completion of the search | Examiner |
|---|---|---|
| Munich | 13 October 2021 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 17 0614

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2021

| Patent document cited in search report | Publication date | Patent family member(s) | Publication date |
|---|---|---|---|
| EP 2055739 A1 | 06-05-2009 | AT 455150 T | 15-01-2010 |
| | | AU 2008317730 A1 | 07-05-2009 |
| | | CN 101842437 A | 22-09-2010 |
| | | EP 2055739 A1 | 06-05-2009 |
| | | ES 2339395 T3 | 19-05-2010 |
| | | RU 2010122341 A | 10-12-2011 |
| | | US 2010255236 A1 | 07-10-2010 |
| | | WO 2009056515 A1 | 07-05-2009 |
| EP 3450472 A1 | 06-03-2019 | BR 112020002817 A2 | 04-08-2020 |
| | | CA 3070053 A1 | 07-03-2019 |
| | | CN 111032707 A | 17-04-2020 |
| | | EP 3450472 A1 | 06-03-2019 |
| | | ES 2765849 T3 | 11-06-2020 |
| | | RU 2739399 C1 | 23-12-2020 |
| | | US 2020165425 A1 | 28-05-2020 |
| | | WO 2019042875 A1 | 07-03-2019 |
| | | ZA 201908085 B | 26-05-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1344793 A
- EP 2055739 A
- EP 2891667 A
- WO 2020239602 A1
- WO 2020239602 A
- WO 2020160892 A1


### Non-patent literature cited in the description


- **CHALLA G ; HERMANS PH ; WEIDINGER A.** *Makromol. Chem.,* 1962, vol. 56, 169
- **TURNER-JONES A ; AIZLEWOOD JM ; BECKETT DR.** *Makromol. Chem.,* 1974, vol. 75, 134
- **PAE KD.** *J. Polym. Sci.,* 1968, vol. 6, 657
- **OBADAL M ; CERMAK R ; STOKLASA K.** *Macromol. Rapid Commun.,* 2005, vol. 26, 1253
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **SINGH, G. ; KOTHARI, A. ; GUPTA, V.** *Polymer Testing,* 2009, vol. 28 (5), 475
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **GREIN, C. et al.** Impact Modified Isotactic Polypropylene with Controlled Rubber Intrinsic Viscosities: Some New Aspects About Morphology and Fracture. *J Appl Polymer Sci,* 2003, vol. 87, 1702-1712
- *CHEMICAL ABSTRACTS,* 1592-23-0
- *CHEMICAL ABSTRACTS,* 1503-48-6